# EUROPEAN PATENT APPLICATION

(11) **EP 2 650 746 A2**
(43) Date of publication of application: **16.10.2013**
(21) Application number: 13161355.6
(22) Date of filing: 27.03.2013
(51) Int. Cl.: G05D 23/19

(54) **User interface having accurized temperature sensor for heating, ventilation and air conditioning system**

(30) Priority: 27.03.2012 US 201213431792
(71) Applicant: Lennox Industries Inc., Richardson, TX 75080 (US)
(72) Inventor: Lazar, Steven C., McKinney, TX Texas 75205 (US); Hrejsa, Peter, Frisco, TX Texas 75034 (US)
(74) Representative: Williams, David John

(57) **Abstract**

A user interface for use with an HVAC system, a method of providing temperature data of increased accuracy with a user interface of an HVAC system and an HVAC system incorporating the user interface or the method. In one embodiment, the user interface includes: (1) a case, (2) a backlit display configured to provide information to a user, (3) a processor and memory coupled to the backlit display and configured to drive the backlit display and (4) a temperature sensor thermally isolated from the backlit display and associated with the case.

## Description

### TECHNICAL FIELD

This application is directed, in general, to a heating, ventilation and air conditioning (HVAC) systems and, more specifically, to an HVAC system having a user interface, such as a thermostat.

### BACKGROUND

Users interact with HVAC systems through user interfaces. The most common user interface employed today is the thermostat. The most basic thermostats feature one or more dials, switches or levers and allow users to set temperatures. More elaborate thermostats feature a liquid crystal display (LCD) screen, perhaps even of the touchscreen variety, and allow users to program their HVAC systems for automatic temperature settings, configure and maintain their HVAC systems and records of historical operation data, allowing the users to gauge the performance and efficiency of their HVAC systems.

Thermostats necessarily include both temperature sensors and control circuitry within their housings. Some user interfaces do not qualify as thermostats, because while they communicate with temperature sensors and control circuitry, they do not include both within their housings.

### SUMMARY

One aspect provides a user interface. In one embodiment, the user interface includes: (1) a case, (2) a backlit display configured to provide information to a user, (3) a processor and memory coupled to the backlit display and configured to drive the backlit display and (4) a temperature sensor thermally isolated from the backlit display and associated with the case.

Another aspect provides a method of providing temperature data of increased accuracy with a user interface of an HVAC system. In one embodiment, the method includes: (1) employing a backlit display to provide information to a user, (2) employing a processor and memory coupled to the backlit display to drive the backlit display and (3) employing a temperature sensor thermally isolated from the backlit display and associated with a case of the user interface to provide the temperature data.

Yet another aspect provides an HVAC system. In one embodiment, the HVAC system includes: (1) a heat pump or a compressor having at least one stage, (2) at least one condenser coil, (3) an expansion valve, (4) at least one evaporator coil, (5) a loop of pipe interconnecting the heat pump or compressor, the at least one condenser coil, the expansion valve and the at least one evaporator coil and containing a refrigerant, (6) at least one fan configured to cause outdoor air and indoor air to blow over the at least one condenser coil and the least one evaporator coil and (7) a user interface, including: (7a) a case, (7b) a backlit display configured to provide information to a user, (7c) a processor and memory coupled to the backlit display and configured to drive the backlit display and (7d) a temperature sensor thermally isolated from the backlit display and associated with the case.

### BRIEF DESCRIPTION

Reference is now made to the following descriptions taken in conjunction with the accompanying drawings, in which:
FIG. 1 is a block diagram of one embodiment of a user interface;
FIG. 2 is a front-side elevational view of one embodiment of a user interface;
FIG. 3 is a graph showing sensed and actual ambient air temperatures as a function of time for a user interface employing a first embodiment of an accurized temperature sensor configuration;
FIG. 4 is a front-side elevational view of one embodiment of the user interface of FIG. 2 in which a front-side portion of a case thereof has been removed to show internal components of the user interface, including the first embodiment of the accurized temperature sensor configuration;
FIG. 5 is a graph showing sensed and actual ambient air temperatures as a function of time for a user interface employing a second embodiment of an accurized temperature sensor configuration;
FIG. 6 is a front-side elevational view of one embodiment of the user interface of FIG. 2 in which a front-side portion of a case thereof has been removed to show internal components of the user interface, including the second embodiment of the accurized temperature sensor configuration;
FIG. 7 is a schematic diagram of one embodiment of a calibration circuit for an accurized temperature sensor configuration; and
FIG. 8 is a flow diagram of one embodiment of a method of providing temperature data of increased accuracy with a user interface of an HVAC system.

### DETAILED DESCRIPTION

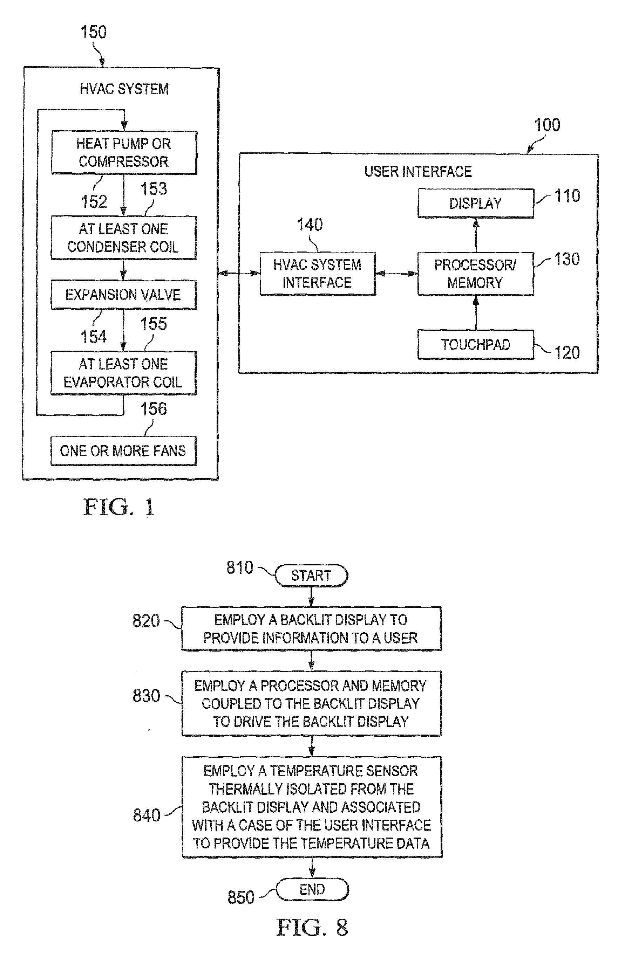

FIG. 1 is a block diagram of one embodiment of a user interface 100. The interface has a display 110 and a touchpad 120. The display 110 is configured to provide information to a user, and the touchpad 120 is configured to accept input from a user. A processor and memory 130 are coupled to the display 110 and the touchpad 120 to drive the display 110 and process the input from the touchpad 120. More accurately, software or firmware is loaded into and stored in the memory and, when executed in the processor, configures the processor to drive the display 110 and process the input from the touchpad 120. An HVAC system interface 140 is coupled to the processor and memory 130 and is configured to provide communication between the processor and memory 130 and the remainder of an HVAC system 150. In various embodiments, the HVAC system 150 includes one or more loops of pipe (one being shown and referenced as 151) containing a refrigerant. Each loop transports the refrigerant among a heat pump or a compressor 152 having at least one stage, at least one condenser coil 153, an expansion valve 154 and at least one evaporator coil 155. One or more fans ("blowers") 156 cause outdoor air and indoor air to blow over the at least one condenser coil 153 and the at least one evaporator coil 155 to transfer heat to or from them. Those skilled in the pertinent art are familiar with conventional HVAC systems and generally understand the many embodiments and forms they may take.

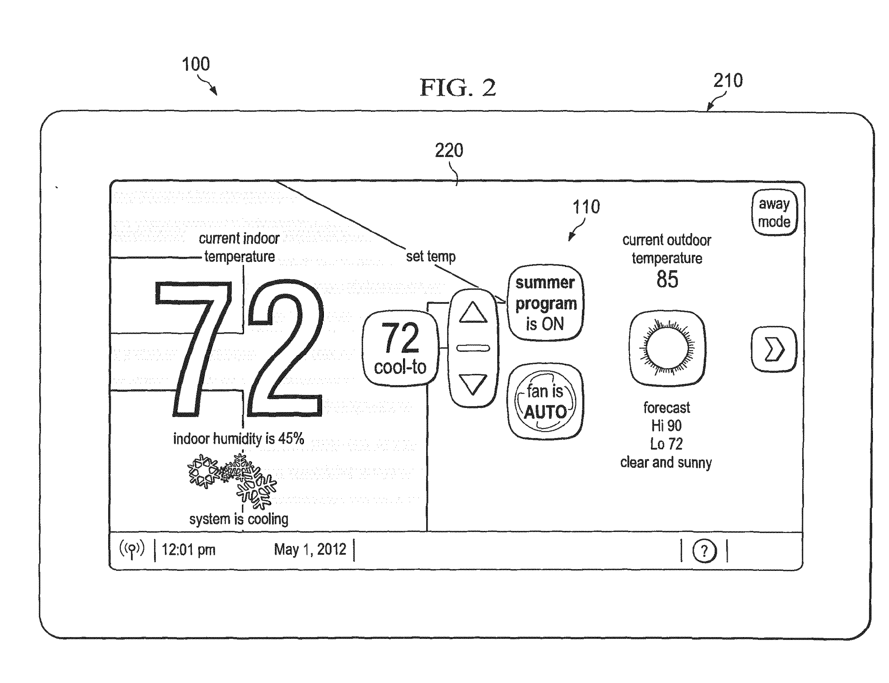

FIG. 2 is a front-side elevational view of one embodiment of the user interface of FIG 1. The user interface 100 has a bezel, which is part of a case 210. The display 110 is configured to display at least one screen 220 of information for the benefit of a user (the term also including an installer or any other person interested in gaining information from the user interface 100).

Although unreferenced, the screen 220 shown in FIG. 2 includes a current temperature display portion, a setpoint temperature display portion, buttons to raise or lower the setpoint temperature, a system mode message display portion (*i.e*., "system is heating") and a program status message display portion (*i.e*., "program is on"). The screen 220 also has current date and time display portions and allows the user to display other screens (via a "press for more" message).

The user interface employs a display (*e.g*., a liquid-crystal display, or LCD) illuminated by a backlight that generates heat when lit. It has been discovered herein that the amount of heat generated during the operation of the display varies over time, depending heavily upon whether or not the backlight is lit. It has been further discovered herein that the variability of the heat generated causes the temperature of the circuit board, on which temperature sensors are conventionally mounted, to vary. Consequently, it is realized herein that mounting a temperature sensor to the circuit board or otherwise failing to take steps to isolate the temperature sensor at least to some extent from the varying heat compromises the accuracy of the temperature data provided by the temperature sensor. As a result, the operation of the HVAC system as a whole may be compromised.

It is thereby realized a novel configuration of the temperature sensor in which the sensor is rendered more accurate ("accurized") by thermally isolating it from heat sources, and more particularly associating it with the case 210, would achieve an advantageous degree of thermal isolation and potentially not only improve the overall accuracy of the temperature data but the operation of the HVAC system.

Introduced herein are various embodiments of an HVAC system user interface having an accurized temperature sensor configuration. In one embodiment, the temperature sensor is mounted on the user interface's case. In a more specific embodiment, the temperature sensor is adhesively bonded to the user interface's case. In another embodiment, the temperature sensor is embedded in the user interface's case.

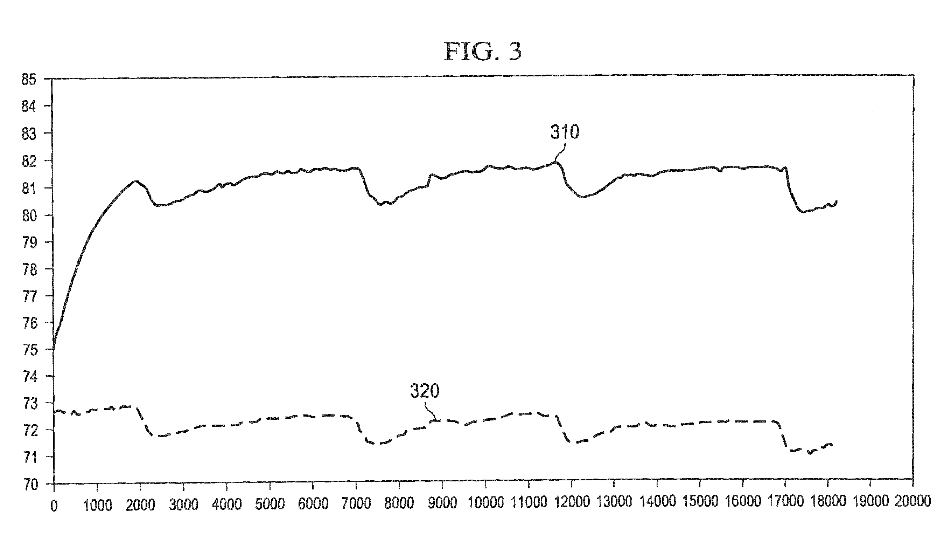

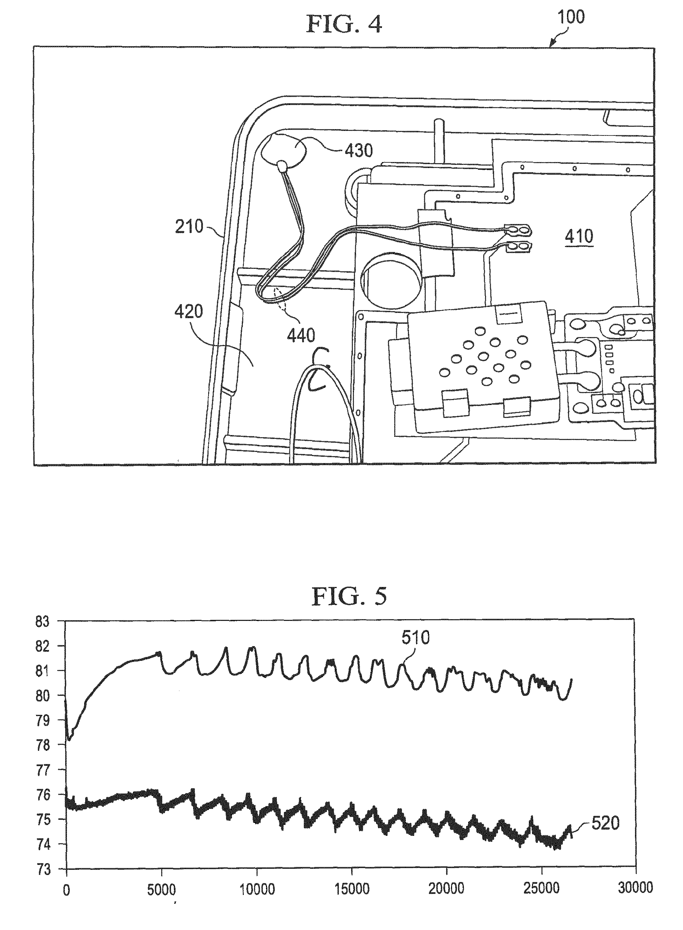

FIG. 3 is a graph showing sensed and actual ambient air temperatures as a function of time for a user interface employing a first embodiment of an accurized temperature sensor configuration. In the first embodiment, the temperature sensor is mounted on the user interface's case. FIG. 4 will illustrate one embodiment of such mounting.

For purposes of producing the graph of FIG. 3, an example user interface was placed in an example room. A curve 310 shows the temperature reflected by the output data from a the temperature sensor mounted on the user interface's case. A curve 320 shows the ambient temperature of the room and therefore may be considered the true temperature of the room. It is apparent from an examination of the graph that, following an initial startup period of perhaps 2000 seconds, the curve 310 exhibits a substantially constant temperature offset from the curve 320 of about 10°F (about 9.25°F to be more accurate). Hardware, firmware or software associated with the temperature sensor or the user interface can be configured to compensate for this substantially constant, and therefore predictable, offset.

FIG. 4 is a front-side elevational view of one embodiment of the user interface 100 of FIG. 2 in which a front-side portion of the case 210 has been removed to show internal components of the user interface 100, including the first embodiment of the accurized temperature sensor configuration. A circuit board 410 is configured to provide a mounting structure for one or more electronic components (not separately referenced). The circuit board 410 is supported by the case 210. A temperature sensor 430 is mounted on the case 210. In the illustrated embodiment, the temperature sensor 430 is mounted on an inner surface 420 of the case 210. One or more leads 440 extend from the temperature sensor 430 to the circuit board 410 and are configured to couple the temperature sensor 430 to the one or more electronic components mounted on the circuit board 410. In the illustrated embodiment, the leads 440 are of such length that they do not transfer substantial heat from the circuit board 410 to the temperature sensor 430. Further, in the illustrated embodiment, the case 210 is formed of a plastic resin that does not transfer substantial heat from the circuit board. In the illustrated embodiment, the temperature sensor 430 is mounted such that it is below the circuit board 410 when the user interface 100 is mounted to a wall in a customary manner. This minimizes the impingement of warm, convective currents on the temperature sensor 430 that may tend to decrease its accuracy.

In the illustrated embodiment, the temperature sensor 430 is a thermistor. Those skilled in the pertinent art are familiar with other types of temperature sensors that may be employed in alternative embodiments. In the illustrated embodiment, a potting compound or glue (not referenced) bonds the temperature sensor 430 to the case 210. Those skilled in the pertinent art are familiar with other mechanisms or substances by which a temperature sensor may be mounted to the case 210.

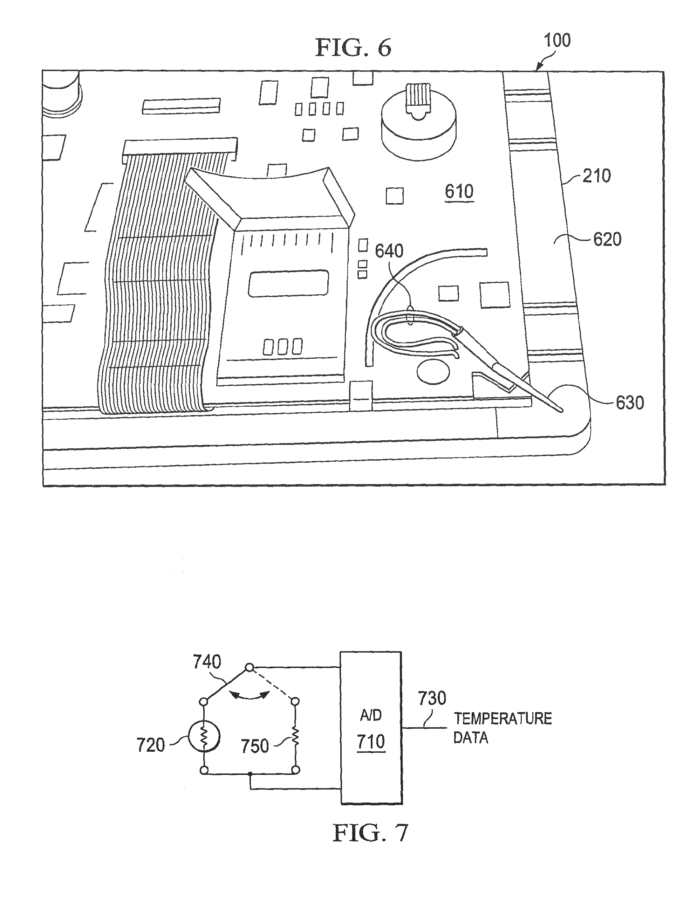

FIG. 5 is a graph showing sensed and actual ambient air temperatures as a function of time for a user interface employing a second embodiment of an accurized temperature sensor configuration. In the second embodiment, the temperature sensor is embedded in the user interface's case. FIG. 6 will illustrate one embodiment of such mounting.

For purposes of producing the graph of FIG. 5, an example user interface was placed in an example room. A curve 510 shows the temperature reflected by the output data from a the temperature sensor mounted on the user interface's case. A curve 520 shows the ambient temperature of the room and therefore may be considered the true temperature of the room. It is apparent from an examination of the graph that, following an initial startup period of perhaps 4000 seconds, the curve 510 exhibits a substantially constant temperature offset from the curve 520 of about 6°F (about 5.8°F to be more accurate). As with the first embodiment, hardware, firmware or software associated with the temperature sensor or the user interface can be configured to compensate for this substantially constant, and therefore predictable, offset.

FIG. 6 is a front-side elevational view of one embodiment of the user interface of FIG. 2 in which a front-side portion of the case 210 thereof has been removed to show internal components of the user interface 100, including the second embodiment of the accurized temperature sensor configuration. A circuit board 610 is configured to provide a mounting structure for one or more electronic components (not separately referenced). The circuit board 610 is supported by the case 210. A temperature sensor 630 is mounted on the case 210. In the illustrated embodiment, the temperature sensor 630 is mounted on an inner surface 620 of the case 210. One or more leads 640 extend from the temperature sensor 630 to the circuit board 610 and are configured to couple the temperature sensor 630 to the one or more electronic components mounted on the circuit board 610. In the illustrated embodiment, the case 210 is formed of a plastic resin that does not transfer substantial heat from the circuit board.

In the illustrated embodiment, the temperature sensor 630 is mounted such that it is below the circuit board 610 when the user interface 100 is mounted to a wall in a customary manner. This minimizes the impingement of warm, convective currents on the temperature sensor 630 that may tend to decrease its accuracy. In the illustrated embodiment, the temperature sensor 630 is a thermistor. Those skilled in the pertinent art are familiar with other types of temperature sensors that may be employed in alternative embodiments.

Conventional user interfaces based on digital microprocessors or microcontrollers employ highly accurate, and therefore relatively expensive, digital-to-analog (D/A) converters to convert the analog output of a temperature sensor to digital temperature data. Such D/A converters are regarded as accurate because they have a substantially linear response over a wide input range.

It is recognized herein that an inferior configuration of temperature sensors in conventional user interfaces significantly reduces the accuracy of the temperature data and renders irrelevant most of the accuracy that highly accurate D/A converters provide. It is further recognized that the environments in which user interfaces are typically employed (*e.g*., residences and offices) are controlled to stay within a relatively narrow band of tolerable temperatures (around what is colloquially regarded as "room temperature"), likewise rendering irrelevant much of the wide input range that highly accurate D/A converters provide. It is therefore recognized that, assuming a less accurate, less expensive D/A converter can be properly calibrated for reasonably foreseeable room temperatures (*e*.*g*., about 50°F to about 100°F in some embodiments), the resulting temperature data will be suitably accurate.

Accordingly, some embodiments described herein employ a less accurate A/D converter. In some of those embodiments, the A/D converter exhibits substantial nonlinearities outside of a range spanning about 50°F (*e*.*g*., 50°F-100°F). In other of these embodiments, the A/D converter is of a type that varies in terms of the output it produces based on a given input from one converter to the next. In other words, the A/D converter cannot be assumed to be accurate off-the-shelf and instead requires calibration. Therefore, the embodiments that employ a less accurate D/A converter also employ a calibration circuit to calibrate the A/D converter. In an embodiment to be illustrated and described, the temperature sensor is a thermistor, and the calibration circuit includes a resistor.

FIG. 7 is a schematic diagram of one embodiment of a calibration circuit for an accurized temperature sensor configuration. A D/A converter 710 accepts an analog input (e.g., an analog voltage) and provides as output one or more digital numbers (*i.e*., data) representing the analog input. During normal operation of the user interface, a temperature sensor 720 (e.g., a thermistor) provides the analog input, and the D/A converter 710 provides temperature data 730. However, a switch 740 allows a resistor 750 to be substituted for the temperature sensor 720 to calibrate the A/D converter 710. The resistor has a known, fixed resistance that is the same as a resistance that the temperature sensor 720 exhibits at a certain temperature. Thus, the output of the A/D converter 710 can be calibrated (*e.g*., in terms of skew) to cause the temperature data to reflect the certain temperature when the resistor 750 is substituted during calibration. In an alternative embodiment, multiple resistors having different resistances corresponding to multiple temperatures can be employed to calibrate the scale, as well as the skew, of the A/D converter 710.

FIG. 8 is a flow diagram of one embodiment of a method of providing temperature data of increased accuracy with a user interface of an HVAC system. The method begins in a start step 810. In a step 820, a backlit display is employed to provide information to a user. In a step 830, a processor and memory coupled to the backlit display is employed to drive the backlit display. In a step 840, a temperature sensor thermally isolated from the backlit display and associated with a case of the user interface is employed to provide the temperature data. The method ends in an end step 850.

Those skilled in the art to which this application relates will appreciate that other and further additions, deletions, substitutions and modifications may be made to the described embodiments.

## Claims

1. A user interface for use with an HVAC system, comprising:
a case;
a backlit display configured to provide information to a user;
a processor and memory coupled to said backlit display and configured to drive said backlit display; and
a temperature sensor thermally isolated from said backlit display and associated with said case.

2. The user interface as recited in Claim 1 wherein said temperature sensor is mounted on said case.

3. The user interface as recited in Claim 1 wherein said temperature sensor is embedded in said case.

4. The user interface as recited in Claim 1 further comprising:
a D/A converter coupled to said temperature sensor;
and
a calibration circuit couplable to said D/A converter.

5. The user interface as recited in Claim 1 wherein said temperature sensor is a thermistor.

6. The user interface as recited in Claim 1 wherein said backlit display is a backlit liquid crystal display.

7. The user interface as recited in Claim 1 further comprising a circuit board coupled to said backlit display, said processor and said memory and wherein said temperature sensor is located below said circuit board when said user interface is mounted to a wall in a customary manner.

8. An HVAC system, comprising:
a heat pump or a compressor having at least one stage;
at least one condenser coil;
an expansion valve;
at least one evaporator coil;
a loop of pipe interconnecting said heat pump or compressor, said at least one condenser coil, said expansion valve and said at least one evaporator coil and containing a refrigerant;
at least one fan configured to cause outdoor air and indoor air to blow over said at least one condenser coil and said least one evaporator coil; and
a user interface, including:
a case;
a backlit display configured to provide information to a user,
a processor and memory coupled to said backlit display and configured to drive said backlit display, and
a temperature sensor thermally isolated from said backlit display and associated with said case.

9. The HVAC system as recited in Claim 8 wherein said temperature sensor is mounted on said case.

10. The HVAC system as recited in Claim 8 wherein said temperature sensor is embedded in said case.
